# EUROPÄISCHE PATENTSCHRIFT

(11) **EP 4 538 068 B1**
(45) Veröffentlichungstag und Bekanntmachung des Hinweises auf die Patenterteilung: **17.12.2025**
(21) Anmeldenummer: 23202766.4
(22) Anmeldetag: 10.10.2023
(51) Int. Cl.: B60G 7/00

(54) **LENKER FÜR EINE RADAUFHÄNGUNG IN EINEM KRAFTFAHRZEUG**
LINK FOR A WHEEL SUSPENSION IN A MOTOR VEHICLE
BRAS DE SUSPENSION POUR VÉHICULE AUTOMOBILE

(43) Veröffentlichungstag der Anmeldung: 16.04.2025
(73) Patentinhaber: Benteler Automobiltechnik GmbH, 33102 Paderborn (DE)
(72) Erfinder: HOLMGREN, Tom, 2825 Gjøvik (NO)
(74) Vertreter: Ksoll, Peter

(56) Entgegenhaltungen:
- DE-A1- 19 721 752
- DE-C1- 3 921 468
- KR-A- 20030 018 551
- KR-A- 20220 067 769

## Beschreibung

Die Erfindung betrifft einen Lenker für eine Radaufhängung in einem Kraftfahrzeug mit einem Lenkerkörper aus Leichtmetall, insbesondere Aluminium, welcher zwei zueinander parallele Seitenwände aufweist, wobei in zumindest einer Seitenwand ein Langloch für eine Exzenterhalterung vorgesehen ist.

Lenker sind Komponenten der Radaufhängung eines Kraftfahrzeugs. Die Lenker müssen hohe radiale Kräfte, wie Brems- und Antriebskräfte, aufnehmen. Zusätzlich stützen die Lenker im Zusammenwirken mit anderen Fahrwerkskomponenten das Gewicht eines Kraftfahrzeugs ab.

Über eine Exzenterverstelleinrichtung, die üblicherweise Exzenterelemente wie Exzenterscheiben oder Exzenterschrauben und/oder Steuerelemente aufweist, kann eine Ausrichtung eines Lenkers relativ zur radträgerseitigen Anbindung erfolgen. Auf diese Weise können Fahrzeugtoleranzen ausgeglichen sowie auch Spur und/oder Sturz der Räder eines Kraftfahrzeugs eingestellt werden. Die Exzenterverstelleinrichtung wirkt mit Langlöchern in den Seitenwänden des Lenkers zusammen an denen sie über eine Exzenterhalterung festgelegt werden kann.

Zum Stand der Technik zählen Ausführungsformen von Lenkern mit Exzenterverstelleinrichtungen wie in der US 2020/0361265 A1, der DE 10 2019 002 874 A1 oder der KR 100907068 B1 offenbart.

Die KR 2022 0067769 A offenbart einen Lenker entsprechend dem Oberbegriff des Anspruchs 1 und beschreibt einen Lenker für ein Kraftfahrzeug, in dem ein Kopplungsloch ausgebildet ist, mit dem eine Nockenbolzenführung gekoppelt werden kann. Zur Kopplung weist die Nackenbolzenführung vier Halteelemente auf, die mit dem Lenker pressgefügt werden können.

Die DE 39 21 468 C1 offenbart einen Lenker für Radaufhängungen von Kraftfahrzeugen mit einem ringförmigen Kragen an zwei Blechteilen, wobei beide Kragen ein Lagerteil umgeben.

Weiterer Stand der Technik wird durch die KR 2003 0018551 A und die DE 197 21 752 A1 gebildet.

Um ein möglichst geringes Bauteilgewicht zu erreichen, werden die Lenkerkörper der Lenker häufig aus Leichtmetall bzw. einer Leichtmetalllegierung gefertigt, insbesondere aus Aluminium der 5000er Serie bis der 7000er Serie.

Lenkerkörper aus Leichtmetall sind vorteilhaft im Gewicht. Allerdings sind die Bauteile auch anfällig, hinsichtlich Beschädigungen bzw. Verschleiß aufgrund der hohen im Betrieb einwirkenden Kräfte und Momente. Auch können die Lenkerkörper bei der Montage oder den Einstellvorgängen für den Sturz- und Sturzwinkel beschädigt werden. Dies gilt auch für Lenkerkörper aus anderen Leichtbauwerkstoffen, wie etwa Lenkerkörper aus Faserverbundkunststoffen.

Der Erfindung liegt ausgehend vom Stand der Technik die Aufgabe zugrunde, einen leichtbauenden und funktional verbesserten Lenker aufzuzeigen, der insbesondere hinsichtlich des Verschleißschutzes im Bereich der Anbindung einer Exzenterverstelleinrichtung an bzw. in den Seitenwänden des Lenkerkörpers verbessert ist.

Die Lösung dieser Aufgabe besteht in einem Lenker gemäß Anspruch 1.

Vorteilhafte Ausgestaltungen und Weiterbildungen des erfindungsgemäßen Lenkers sind Gegenstand der abhängigen Ansprüche.

Ausgestaltungen und Modifikationen von Merkmalen des erfindungsgemäßen Lenkers, die einzeln oder in Kombination die Erfindung in technisch vorteilhafter Weise ausgestalten und/oder weiterbilden, ergeben sich auch aus der Beschreibung und den beigefügten Zeichnungen.

Ein erfindungsgemäßer Lenker für eine Radaufhängung in einem Kraftfahrzeug weist einen Lenkerkörper auf. Insbesondere besteht der Lenkerkörper aus Leichtmetall, vorzugsweise aus Aluminium bzw. einer Aluminiumlegierung der 5000er Serie bis 7000er Serie. Der Lenkerkörper besitzt zwei insbesondere zueinander parallele Seitenwände. In zumindest einer Seitenwand ist ein Langloch für eine Exzenterhalterung vorgesehen. Die Exzenterhalterung wirkt mit einer Exzenterverstelleinrichtung zusammen. Mittels der Exzentereinstellvorrichtung kann die relative Lage des Lenkers zur Radaufhängung bestimmt und Sturz- und Spurwinkel eingestellt werden.

Die Exzenterhalterung ist im Langloch einer Seitenwand festgelegt.

Erfindungsgemäß weist die Exzenterhalterung eine Grundplatte mit einer Langlochöffnung auf, wobei rückseitig der Grundplatte ein randseitig der Langlochöffnung angeordneter Ankerkörper vorgesehen ist. Vorderseitig der Grundplatte sind zwei von der Grundplatte vorstehende Exzenteranschläge angeordnet. Die insbesondere randseitig der Grundplatte angeordneten Exzenteranschläge dienen als Steuerbahn für ein Stellelement der Exzenterverstelleinrichtung, wie insbesondere einer Exzenterscheibe. Erfindungsgemäß ist die Exzenterhalterung mit dem Ankerkörper im Langloch pressgefügt. Hierzu sind der Ankerkörper der Exzenterhalterung und das Langloch in der Seitenwand des Lenkers so hergestellt und konfigurativ aufeinander abgestimmt, dass nach dem Fügen an den Verbindungsstellen eine Presspassung entsteht. Hierdurch können Längs- und Querkräfte kraftschlüssig übertragen werden.

Die erfindungsgemäße Exzenterhalterung übernimmt in einem Bauteil eine Schutzfunktion gegen Verschleiß oder Beschädigung beim Einstellen von Spur und Sturz und fungiert auch als Exzenterscheibenanschlag einer Exzenterverstelleinrichtung. Insbesondere wird der Bereich im bzw. um das Langloch in der Seitenwand des Lenkerkörpers vor Verschleiß und Beschädigungen geschützt.

Die erfindungsgemäße Exzenterhalterung ist mit dem Ankerkörper in das Langloch in der Seitenwand des Lenkerkörpers eingepresst und pressgefügt. Die Fügung ist hoch stabil und belastbar. Kräfte werden zuverlässig aufgenommen und übertragen. Der aus Leichtmetall bestehende Lenkerkörper ist durch die Exzenterhalterung im Anbindungsbereich vor Verschleiß und Beschädigungen geschützt. Durch die Exzenterhalterung können zudem Materialkosten, Gewicht und Werkstoff selbst eingespart werden. Auch bauraumtechnisch ist die Exzenterhalterung vorteilhaft. Die Festlegung der Exzenterhalterung durch den Ankerkörper im Langloch ist bauraumoptimiert. Die Grundplatte der Exzenterhalterung liegt unmittelbar an der Seitenwand des Lenkerkörpers an. Der Ankerkörper stellt die hoch belastbare Fügung der Exzenterhalterung an der Seitenwand sicher, bildet einen mechanischen Schutz und stellt gleichzeitig die Langlochöffnung für die Exzenterverstelleinrichtung bereit. Durch die Integration der Exzenteranschläge in die Exzenterhaltung ist eine weitere Bauraumoptimierung möglich.

Der Ankerkörper der Exzenterhalterung ist rückseitig der Grundplatte angeordnet. Rückseitig der Grundplatte bedeutet, dass der Ankerkörper auf der zur Seitenwand des Lenkerkörpers gerichteten Seite von der Grundplatte vorkragt. Der Ankerkörper ist umlaufend um die Langlochöffnung ausgebildet. Der Ankerkörper ist ringförmig gestaltet. Die Längswände bzw. -stege des Ankerkörpers verlaufen parallel und gehen jeweils durch halbkreisförmige Wandabschnitte des Ankerkörpers ineinander über. Vorzugsweise ist der Ankerkörper ein auf der Rückseite der Grundplatte umlaufend aus der Ebene der Grundplatte umgestellter langlochförmiger Kranz oder Ring.

Der Ankerkörper ist dazu eingerichtet und bestimmt, in das Langloch einer Seitenwand des Lenkerkörpers eingeführt und in dem Langloch mit der Seitenwand pressgefügt zu werden, so dass die Exzenterhalterung zuverlässig an der Seitenwand des Lenkerkörpers festgelegt ist.

Die Exzenterhalterung ist einstückig ausgeführt. Die Grundplatte, der Ankerkörper und die Exzenteranschläge sind werkstoffeinheitlich einstückig ausgebildet. Insbesondere besteht die Exzenterhalterung aus einem Stahlwerkstoff.

Die Exzenteranschläge sind vorderseitig der Grundplatte angeordnet. Vorderseitig der Grundplatte bedeutet, dass die Exzenteranschläge auf der von der Seitenwand des Lenkerkörpers abgewandten Seite der Exzenterhalterung bzw. der Grundplatte vorgesehen sind. Die Exzenteranschläge sind aus dem Werkstoff der Exzenterhalterung in der Grundplatte ausgeformt. Die Exzenteranschläge können beispielsweise als Nocken oder Kragen an bzw. in der Grundplatte ausgebildet sein. Insbesondere sind die Exzenteranschläge durch umgestellte Randstege am äußeren Umfang der Grundplatte gebildet.

Das Langloch in der Seitenwand des Lenkerkörpers und die Langlochöffnung in der Grundplatte der Exzenterhalterung sind gleichachsig zueinander ausgerichtet bzw. liegen auf einer gemeinsamen Mittelachse. Der Ankerkörper ist im Langloch der Seitenwand pressgefügt. Zwischen dem Innenumfang des Langlochs und dem Außenumfang des Ankerkörpers entsteht nach dem Fügen an den Verbindungsstellen eine Presspassung. Längs- und Querkräfte werden kraftschlüssig übertragen.

Zur Erhöhung der Anpresskraft des Ankerkörpers im Langloch kann dieser mechanisch aufgeweitet werden. Dies erfolgt durch Aufbringen einer äußeren Kraft innenseitig der Langlochöffnung.

Eine vorteilhafte Ausgestaltung sieht vor, dass zusätzlich eine Formschlussverbindung zwischen Ankerkörper und Seitenwand erzeugt wird. Hierzu wird der Ankerkörper zusätzlich umgeformt. Dies erfolgt vorzugsweise in dem der Ankerkörper von der Rückseite der Grundplatte her oder auf der der Grundplatte gegenüberliegenden Seite der Seitenwand umgebördelt, verclincht oder verprägt wird. Auch eine Durchsetzfügung ist denkbar.

Insbesondere durchsetzt der Ankerkörper das Langloch in der Seitenwand zumindest bereichsweise und ist auf der der Grundplatte gegenüberliegenden Seite der Seitenwand umgeformt.

Wie bereits erwähnt, besteht der Lenkerkörper vorzugsweise aus Leichtmetall oder einer Leichtmetalllegierung. Insbesondere besteht der Lenkerkörper aus Aluminium bzw. einem Aluminiumwerkstoff.

Der Lenkerkörper kann aus einem Leichtbauwerkstoff bestehen, und zwar aus einem metallischen Leichtbauwerkstoff oder auch aus einem nicht metallischen Leichtbauwerkstoff, wie insbesondere einem Faserverbundkunststoff.

Die Exzenterhaltung besteht aus einem höherfesterem Werkstoff als der Werkstoff des Lenkerkörpers.

Die Exzenterhalterung besteht insbesondere aus Stahl.

Eine weitere vorteilhafte Ausgestaltung sieht vor, dass die Exzenterhalterung eine Oberflächenbeschichtung aufweist. Für die Praxis ist insbesondere eine Zink- oder eine Zinklamellenbeschichtung besonders gut geeignet.

Je nach Bauformvariante oder Modellreihe besitzt die Grundplatte eine rechteckförmige Außenkontur. Möglich ist auch, dass die Grundplatte eine kreis- oder ellipsenförmige Außenkontur aufweist.

Denkbar ist auch, dass die Grundplatte in einer Aufnahme in der Seitenwand eingelassen ist. Die Seitenwand des Lenkerkörpers weist dann im Bereich um das Langloch eine an die Außenkontur der Grundplatte angepasste bzw. auf diese abgestimmte Vertiefung auf, in welcher die Grundplatte vorzugsweise bündig einliegt.

Die Erfindung ist nachfolgend anhand von in den Zeichnungen dargestellten Ausführungsbeispielen näher beschrieben. Es zeigen:
- Figur 1: in einer perspektivischen Darstellung einen Ausschnitt aus einem Lenker mit der Darstellung einer Seitenwand und einer mit der Seitenwand gefügten Exzenterhalterung;
- Figur 2: die Exzenterhalterung in einer Seitenansicht;
- Figur 3: die Exzenterhalterung in einer Draufsicht;
- Figur 4: einen Schnitt durch die Darstellung der Figur 2 ebenso wie der Figur 5 entlang der Linie A-A und
- Figur 5: eine weitere Ausführungsform einer Exzenterhalterung in einer Frontansicht.

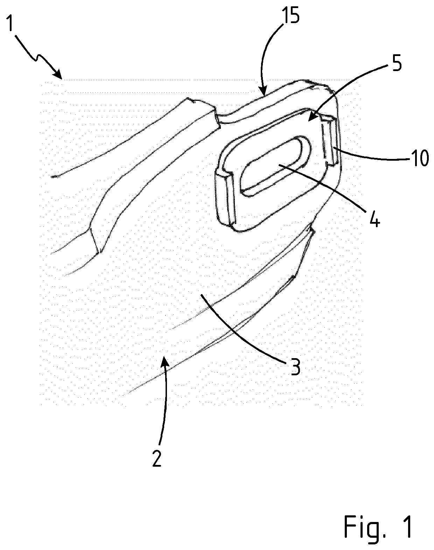

**In** der Figur 1 ist ein Ausschnitt aus einem Lenker 1 für eine Radaufhängung in einem Kraftfahrzeug dargestellt. Der Lenker weist einen Lenkerkörper 2 aus einem Leichtmetallwerkstoff, insbesondere aus Aluminium der 5000er Serie bis 7000er Serie auf. Der Lenkerkörper 2 besitzt zwei zueinander parallele Seitenwände 3, von denen hier nur ein radträgerseitiger Längenabschnitt einer Seitenwand 3 des Lenkerkörpers 2 dargestellt ist.

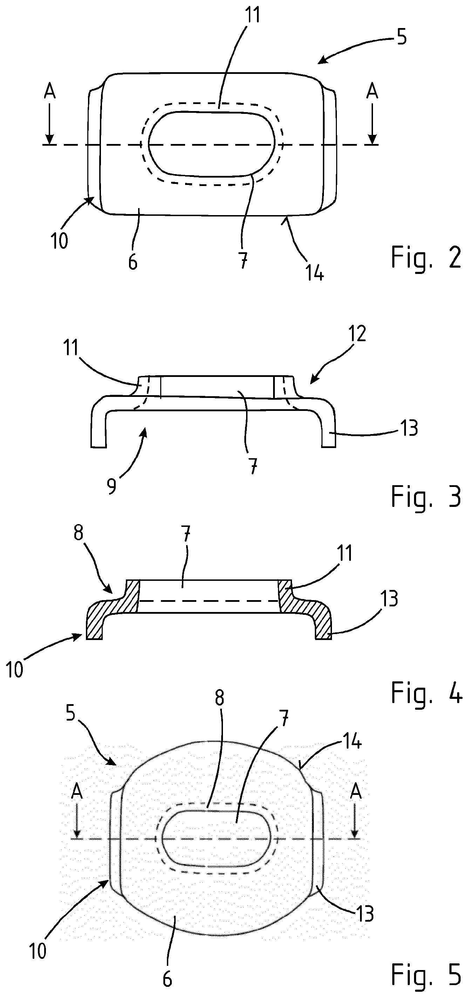

**In** der Seitenwand 3 ist ein Langloch 4 für eine Exzenterhalterung 5 vorgesehen. Die Exzenterhalterung 5 ist ebenfalls in den Figuren 2 bis 5 dargestellt. Die Exzenterhalterung 5 weist eine Grundplatte 6 mit einer Langlochöffnung 7 auf. Rückseitig der Grundplatte 6 ist ein sich randseitig um die Langlochöffnung 7 erstreckender Ankerkörper 8 ausgebildet. Vorderseitig bzw. auf der Vorderseite 9 der Grundplatte 6 sind zwei von der Grundplatte 6 vorstehende Exzenteranschläge 10 angeordnet. Der Ankerkörper 8 ist ringförmig umlaufend um die Langlochöffnung 7 ausgebildet. Der Ankerkörper 8 weist einen sich um die Langlochöffnung 7 erstreckenden Ring 11 auf, der von der Rückseite 12 der Grundplatte 6 vorragt.

Die Exzenterhalterung 5 mit der Grundplatte 6, dem Ankerkörper 8 und den Exzenteranschlägen 10 sind werkstoffeinheitlich einstückig ausgebildet.

Die Exzenterhalterung 5 ist mit dem Ankerkörper 8 in das Langloch 4 der Seitenwand 3 eingeführt und im Langloch 4 pressgefügt. Die Außenkontur des Ankerkörpers 8 und die Innenkontur des Langlochs 4 in der Seitenwand 3 des Lenkerkörpers 2 sind so hergestellt und von den Abmessungen geometrisch aufeinander abgestimmt, dass durch die Pressfügung an den umlaufenden Fügeflächen eine Presspassung entsteht.

Die Exzenteranschläge 10 sind durch umgestellte Randstege 13 am äußeren Umfang 14 der Grundplatte 6 gebildet.

Die Exzenterhalterung 5 besteht aus einem Stahlwerkstoff und ist mit einer Oberflächenbeschichtung versehen. Bei der Oberflächenbeschichtung handelt es sich insbesondere um eine Zink- oder Zinklamellenbeschichtung.

Durch die Pressfügung zwischen der umlaufenden Außenfläche des Ankerkörpers 8 und der Innenfläche des Langlochs 4 in der Seitenwand 3 ist eine hoch belastbare kraftschlüssige Fügung erzeugt. Zur Erhöhung der Anpresskraft kann der Ankerkörper 8 innen von der Langlochöffnung 7 her aufgeweitet werden. Optional oder zusätzlich kann die Pressfügung durch eine Formschlussfügung ergänzt werden. Hierzu wird der Ankerkörper 8 auf der der Grundplatte 6 gegenüberliegenden Seite 15 der Seitenwand 3 zumindest bereichsweise umgebördelt, verclincht oder verprägt. Insbesondere kann der Ankerkörper 8 das Langloch 4 in der Seitenwand 3, zumindest bereichsweise durchsetzen und ist auf der der Grundplatte 6 gegenüberliegenden Seite der Seitenwand 4 umgeformt, beispielsweise umgebördelt, verclincht oder verprägt.

**In** der Darstellung der Figur 1 und 2 erkannt man, dass die Grundplatte 6 eine im Wesentlichen rechteckförmige Außenkontur besitzt.

Die Exzenterhalterung 5, wie in der Figur 5 dargestellt, entspricht funktional der zuvor beschriebenen. Die Grundplatte 6 besitzt eine kreisförmige Außenkontur.

Wie in der Figur 1 zu erkennen, liegt die Grundplatte 6 mit ihrer Rückseite 12 außen an der Seitenwand 3 an und steht gegenüber der Außenfläche der Seitenwand 3 vor. Möglich ist es auch, dass in der Seitenwand 3 eine konfigurativ auf die Außengeometrie der Grundplatte 6 angepasste Ausnehmung vorgesehen ist, in welcher die Exzenterhalterung 5 mit der Grundplatte 6 einliegt.

### Bezugszeichen:

- 1 -: Lenker
- 2 -: Lenkerkörper
- 3 -: Seitenwand
- 4 -: Langloch in 3
- 5 -: Exzenterhalterung
- 6 -: Grundplatte
- 7 -: Langlochöffnung
- 8 -: Ankerkörper
- 9 -: Vorderseite von 6
- 10 -: Exzenteranschlag
- 11 -: Ring
- 12 -: Rückseite von 6
- 13 -: Randsteg
- 14 -: Umfang
- 15 -: Seite von 3

## Patentansprüche

1. Lenker (1) für eine Radaufhängung in einem Kraftfahrzeug, der Lenker aufweisend eine Exzenterhalterung (5) und einen Lenkerkörper (2), welcher zwei Seitenwände (3) aufweist, wobei in zumindest einer Seitenwand (3) ein Langloch (4) vorgesehen ist, in welchem die Exzenterhalterung (5) festgelegt ist, wobei die Exzenterhalterung (5) eine Grundplatte (6) mit einer Langlochöffnung (7) aufweist, wobei rückseitig der Grundplatte (6) ein sich randseitig der Langlochöffnung (7) erstreckender Ankerkörper (8) vorgesehen ist und vorderseitig der Grundplatte (6) zwei von der Grundplatte (6) vorstehende Exzenteranschläge (10) angeordnet sind und die Exzenterhalterung (5) mit dem Ankerkörper (8) im Langloch (4) pressgefügt ist, **dadurch gekennzeichnet, dass** der Ankerkörper (8) ringförmig umlaufend um die Langlochöffnung (7) ausgebildet ist, wobei die Pressfügung zwischen der umlaufenden Außenfläche des Ankerkörpers (8) und der Innenfläche des Langlochs (4) in der Seitenwand (3) erzeugt ist.

2. Lenker (1) nach Anspruch 1, **dadurch gekennzeichnet, dass** die Exzenteranschläge (10) durch umgestellte Randstege (13) am äußeren Umfang (14) der Grundplatte (6) gebildet sind.

3. Lenker (1) nach einem der Ansprüche 1 bis 2, **dadurch gekennzeichnet, dass** die Exzenterhalterung (5) mit der Grundplatte (6), dem Ankerkörper (8) und den Exzenteranschlägen (10) werkstoffeinheitlich einstückig ausgebildet ist.

4. Lenker (1) nach einem der Ansprüche 1 bis 3, **dadurch gekennzeichnet, dass** der Ankerkörper (8) das Langloch (4) in der Seitenwand (3) zumindest bereichsweise durchsetzt und auf der der Grundplatte (6) gegenüber liegenden Seite (15) der Seitenwand (3) umgeformt ist.

5. Lenker (1) nach einem der Ansprüche 1 bis 4, **dadurch gekennzeichnet, dass** der Lenkerkörper (8) aus Aluminium besteht.

6. Lenker (1) nach einem der Ansprüche 1 bis 5, **dadurch gekennzeichnet, dass** die Exzenterhalterung (5) aus Stahl besteht.

7. Lenker (1) nach einem der Ansprüche 1 bis 6, **dadurch gekennzeichnet, dass** die Exzenterhalterung (5) eine Oberflächenbeschichtung, insbesondere eine Zink- oder Zinklamellenschichtung, aufweist.

8. Lenker (1) nach einem der Ansprüche 1 bis 7, **dadurch gekennzeichnet, dass** die Grundplatte (6) eine rechteckförmige Außenkontur aufweist.

9. Lenker (1) nach einem der Ansprüche 1 bis 8, **dadurch gekennzeichnet, dass** die Grundplatte (6) eine kreis- oder ellipsenförmige Außenkontur aufweist.

## Claims

1. Link (1) for a wheel suspension in a motor vehicle, the link having an eccentric mount (5) and a link body (2) which has two side walls (3), wherein in at least one side wall (3) an elongated hole (4) is provided, into which the eccentric mount (5) is fixed, wherein the eccentric mount (5) has a base plate (6) with an elongated hole opening (7), wherein an anchor body (8), extending at the edge of the elongated hole opening (7), is provided on the rear side of the base plate (6), and two eccentric stops (10), projecting from the base plate (6), are arranged on the front side of the base plate (6), and the eccentric mount (5) is press-fitted to the anchor body (8) in the elongated hole (4), **characterized in that** the anchor body (8) is formed in a ring-shaped manner around the elongated hole opening (7), wherein the press-fit is produced between the circumferential outer surface of the anchor body (8) and the inner surface of the elongated hole (4) in the side wall (3).

2. The link (1) according to claim 1,
**characterized in that** the eccentric stops (10) are formed by repositioned edge webs (13) on the outer circumference (14) of the base plate (6).

3. The link (1) according to any one of claims 1 to 2,
**characterized in that** the eccentric mount (5) is formed from the same material in one piece with the base plate (6), the anchor body (8) and the eccentric stops (10).

4. The link (1) according to any one of claims 1 to 3,
**characterized in that** the anchor body (8) passes through the elongated hole (4) in the side wall (3) at least in some areas and is formed on the side (15) of the side wall (3) opposite the base plate (6).

5. The link (1) according to any one of claims 1 to 4,
**characterized in that** the link body (8) consists of aluminium.

6. The link (1) according to any one of claims 1 to 5,
**characterized in that** the eccentric mount (5) consists of steel.

7. The link (1) according to any one of claims 1 to 6,
**characterized in that** the eccentric mount (5) has a surface coating, in particular a zinc or zinc flake coating.

8. The link (1) according to any one of claims 1 to 7,
**characterized in that** the base plate (6) has a rectangular outer contour.

9. The link (1) according to any one of claims 1 to 8,
**characterized in that** the base plate (6) has a circular or elliptical outer contour.

## Revendications

1. Bras (1) pour une suspension de roue dans un véhicule à moteur, le bras présentant un support excentrique (5) et un corps de bras (2) qui présente deux parois latérales (3), dans lequel un trou oblong (4) est prévu dans au moins une paroi latérale (3) dans lequel le support excentrique (5) est fixé, dans lequel le support excentrique (5) présente une plaque de base (6) avec une ouverture (7) de trou oblong, dans lequel un corps d'ancrage (8) s'étendant côté bord de l'ouverture (7) de trou oblong est prévu à l'arrière de la plaque de base (6) et deux butées excentriques (10) faisant saillie de la plaque de base (6) sont disposées à l'avant de la plaque de base (6) et le support excentrique (5) est serti avec le corps d'ancrage (8) dans le trou oblong (4), **caractérisé en ce que** le corps d'ancrage (8) est formé de manière circulaire autour de l'ouverture (7) de trou oblong, dans lequel l'assemblage par compression est généré entre la surface extérieure périphérique du corps d'ancrage (8) et la surface intérieure du trou oblong (4) dans la paroi latérale (3).

2. Bras (1) selon la revendication 1, **caractérisé en ce que** les butées excentriques (10) sont formées par des nervures de bord (13) inversées sur la circonférence extérieure (14) de la plaque de base (6).

3. Bras (1) selon l'une quelconque des revendications 1 et 2, **caractérisé en ce que** le support excentrique (5) est réalisé avec homogénéité de matériau d'une seule pièce avec la plaque de base (6), le corps d'ancrage (8) et les butées excentriques (10).

4. Bras (1) selon l'une quelconque des revendications 1 à 3, **caractérisé en ce que** le corps d'ancrage (8) traverse le trou oblong (4) dans la paroi latérale (3) au moins par zones et est déformé sur le côté (15) opposé à la plaque de base (6) de la paroi latérale (3).

5. Bras (1) selon l'une quelconque des revendications 1 à 4, **caractérisé en ce que** le corps de bras (8) est en aluminium.

6. Bras (1) selon l'une quelconque des revendications 1 à 5, **caractérisé en ce que** le support excentrique (5) est en acier.

7. Bras (1) selon l'une quelconque des revendications 1 à 6, **caractérisé en ce que** le support excentrique (5) présente un revêtement de surface, en particulier un revêtement en zinc ou en lamelles de zinc.

8. Bras (1) selon l'une quelconque des revendications 1 à 7, **caractérisé en ce que** la plaque de base (6) présente un contour extérieur rectangulaire.

9. Bras (1) selon l'une quelconque des revendications 1 à 8, **caractérisé en ce que** la plaque de base (6) présente un contour extérieur circulaire ou elliptique.
